# EUROPEAN PATENT APPLICATION

(11) **EP 4 804 029 A1**
(43) Date of publication of application: **09.09.2026**
(21) Application number: 26156573.3
(22) Date of filing: 05.02.2026
(51) Int. Cl.: G06F 9/50, G06F 8/60, G06F 8/65, G06N 20/00

(54) **DYNAMIC CONSTRAINT- AND RESOURCE-BASED ARTIFICIAL INTELLIGENCE (AI) DEPLOYMENT PROVISIONING**

(30) Priority: 05.03.2025 US 202519071464
(71) Applicant: Microsoft Technology Licensing, LLC, Redmond, WA 98052 (US)
(72) Inventor: Vidal, Cedric Alexis Damien, Redmond, WA 98056 (US)
(74) Representative: Grünecker Patent- und Rechtsanwälte PartG mbB

(57) **Abstract**

Methods, apparatuses, and products for dynamic constraint- and resource-based artificial intelligence (AI) deployment provisioning, including: receiving a request to create an AI deployment in a cloud computing environment, wherein the request comprises one or more constraints for a selecting a model to be executed in the AI deployment; determining, in response to the request, a resource availability of the cloud computing environment; generating, based on the resource availability and one or more optimization objectives for the AI deployment, a deployment specification, including identifying a model that satisfies the one or more constraints and is able to be executed in the cloud computing environment based on the resource availability; and generating, in the cloud computing environment, the AI deployment based on the deployment specification.

## Description

### BACKGROUND

Cloud computing platforms provide computing resources that can be allocated to users to support their cloud deployments, including artificial intelligence (AI) deployments using machine learning models. When creating these AI deployments, a user typically provides a deployment specification indicating the particular model(s) to be used as well as the specific region(s) for their deployment. Assuming the specified regions have adequate resources to support the AI deployment as defined in the deployment specification, the AI deployment will be created in the cloud computing environment accordingly.

Using these approaches, there are many situations where creation of the AI deployment may fail. For example, creating the AI deployment may fail where the identified regions lack the requisite capacity for the identified model. As another example, certain offerings or configurations of models may only be available in certain regions or to accounts having certain subscription levels. Accordingly, creating the AI deployment may fail where the identified model cannot be used in the identified region or using the account associated with the AI deployment.

A user attempting to troubleshoot a failed AI deployment may experience challenges in finding the root cause of the failed deployment. The user may also spend considerable time attempting to modify their deployment specification in an attempt to find a specification that can be successfully deployed. This may result in significant lost man hours and may delay creation of the AI deployment, resulting in system downtime.

### SUMMARY

According to embodiments of the present disclosure, various methods, apparatus, and products for dynamic constraint- and resource-based artificial intelligence (AI) deployment provisioning are described herein. In some aspects, dynamic constraint- and resource-based artificial intelligence (AI) deployment provisioning includes: receiving a request to create an artificial intelligence (AI) deployment in a cloud computing environment, wherein the request comprises one or more constraints for a selecting a model to be executed in the AI deployment; determining, in response to the request, a resource availability of the cloud computing environment; generating, based on the resource availability and one or more optimization objectives for the AI deployment, a deployment specification, including identifying a model that satisfies the one or more constraints and is able to be executed in the cloud computing environment based on the resource availability; and generating, in the cloud computing environment, the AI deployment based on the deployment specification. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a diagram of an example system for dynamic constraint- and resource-based artificial intelligence (AI) deployment provisioning in accordance with some embodiments.
Fig. 2 sets forth a flow chart illustrating an example method of dynamic constraint- and resource-based artificial intelligence (AI) deployment provisioning in accordance with some embodiments.
Fig. 3 sets forth a flow chart illustrating an additional example method of dynamic constraint- and resource-based artificial intelligence (AI) deployment provisioning in accordance with some embodiments.
Fig. 4 sets forth a flow chart illustrating an additional example method of dynamic constraint- and resource-based artificial intelligence (AI) deployment provisioning in accordance with some embodiments.
Fig. 5 sets forth a flow chart illustrating an additional example method of dynamic constraint- and resource-based artificial intelligence (AI) deployment provisioning in accordance with some embodiments.
Fig. 6 sets forth a flow chart illustrating an additional example method of dynamic constraint- and resource-based artificial intelligence (AI) deployment provisioning in accordance with some embodiments.
Fig. 7 illustrates an exemplary computing device that may be specifically configured to perform one or more of the processes described in the present disclosure.
Fig. 8 sets forth a block diagram of a cloud service provider service architecture in accordance with some embodiments of the present disclosure.

### DESCRIPTION OF EMBODIMENTS

Cloud computing platforms allow users, enterprises, or other groups of users to create deployments that include and execute artificial intelligence (AI) models. When creating these AI deployments, a user typically provides a deployment specification describing a specific configuration of resources to be used in the AI deployment. This deployment specification may indicate, for example, a specific offering or configuration of a model to be used in the AI deployment. The deployment specification may also specify a region in which to create the AI deployment. Assuming the specified region has adequate resources to support the AI deployment as defined in the deployment specification, the AI deployment will be created in the cloud computing environment accordingly.

These approaches for creating AI deployments present several drawbacks. For example, these approaches require a user to specifically indicate specific versions and configurations of models to be included in the AI deployment. This may present difficulties for some users where there are many potential configurations and offerings of models available for selection. As another example, each region of the cloud computing platform may differ in their available hardware resources, available software or services, and the like. Moreover, the resources available in a given region may change over time. Accordingly, the specific region selected by a user may not be able to support the AI deployment as defined in the deployment specification at the time of deployment.

To address these shortcomings, the approaches set forth herein provide a system for generating a deployment specification based on user-provided constraints and resource availability at deployment time. A user provides various constraints for models that may be used in a cloud deployment. These constraints may include ranges or thresholds for various attributes, such as versions, performance metrics, and the like. A deployment specification is then generated to satisfy these constraints while optimizing (e.g., minimizing or maximizing) certain optimization objectives. These optimization objectives may include, for example, minimum financial costs, minimum latency, maximized throughput, and the like. The deployment specification is generated based on available resources at deployment time to ensure that the AI deployment as described in the request can be successfully deployed.

Providing more features and options for cloud computing platforms may provide flexibility and customizability at the cost of increased complexity. Users are less likely to engage with cloud computing platforms that they deem to be overly complex or difficult to use, causing loss of revenue to the provider of the cloud computing platform. The approaches set forth herein provide approaches for automatic creation of an AI deployment based on currently available resources and user-defined constraints. By eliminating the need for a user to specifically define every aspect of their deployment specification, the overall user experience is improved, incentivizing users towards the cloud computing platform and increasing revenue for the provider. Moreover, as the deployment specification is generated based on currently available resources, errors relating to lack of available resources for supporting a AI deployment to be deployed are reduced.

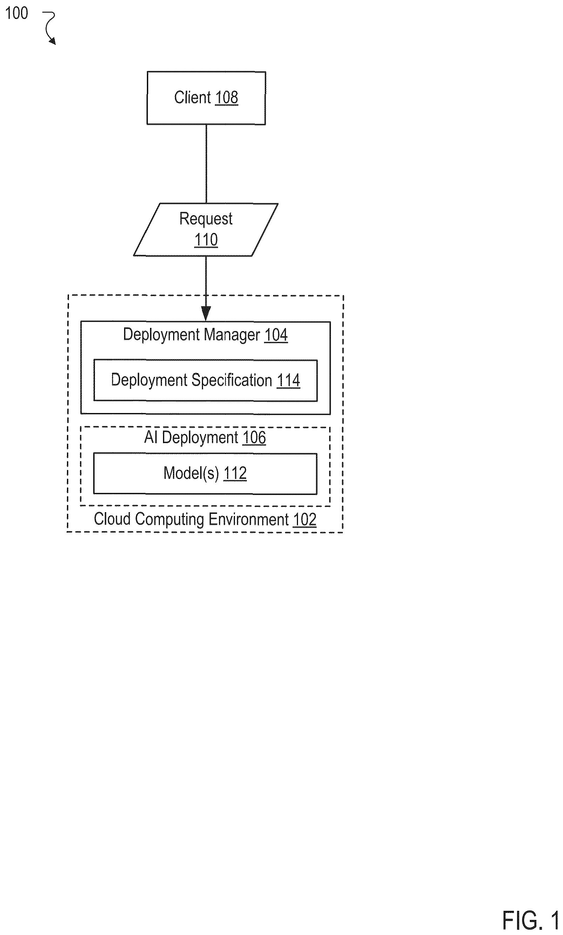

Turning now to Fig. 1, shown is a diagram of an example system 100 for dynamic constraint- and resource-based artificial intelligence (AI) deployment provisioning in accordance with some embodiments of the present disclosure. The system 100 includes a cloud computing environment 102. The cloud computing environment 102 is a set of hardware and software resources that allow for the creation and management of cloud-based computing resources. For example, the cloud computing environment 102 may support a particular cloud computing platform for creating and managing these cloud-based computing resources.

In some embodiments, the cloud computing environment 102 may be logically divided into multiple regions. Each region is a geographic area where cloud services are hosted. In other words, each region is a geographic area having hardware and/or software resources to support operations of the cloud computing environment 102. For example, in some embodiments, each region includes one or more data centers or another collection of computing resources for supporting the cloud computing environment 102. In some embodiments, each region includes one or more availability zones. An availability zone is an isolated or independently operating set of resources such as a data center. Each availability zone provides some level of redundancy in the cloud computing environment 102 such that a failure of one availability zone may allow workloads in that availability zone to failover to another availability zone to maintain system uptime.

The system 100 also includes a deployment manager 104. Although the deployment manager 104 is shown as being executed within the cloud computing environment 102, readers will appreciate that, in some embodiments, the deployment manager 104 is executed in a separate computing device or computing environment that is communicatively coupled to the cloud computing environment 102 (e.g., via a network or other communications path). The deployment manager 104 is a process, service, and/or application that facilitates the creation and management of cloud resources in the cloud computing environment 102 with respect to particular cloud deployments. In other words, the deployment manager 104 may manage resources on the deployment level, and may itself be a component of a cloud manager managing resources across the cloud computing environment 102. For example, the deployment manager 104 may expose one or more interfaces, such as an application programming interface (API), that allows users to create and manage a cloud deployment and its included resources.

A cloud deployment is a logical grouping of cloud resources, which are virtualized instances of software and/or data that have been allocated some amount of hardware resources in the cloud computing environment 102 for their execution. For example, cloud resources may include virtual machines, containers, or other virtualized instances as can be appreciated. As shown, the cloud computing environment 102 includes an artificial intelligence (AI) deployment 106. An AI deployment 106 is a particular type of cloud deployment that executes, as a cloud resource, one or more models 112. The model 112 is an instance of a machine learning model, including generative AI models or other machine learning models as can be appreciated. Particularly, the model 112 as executed in an AI deployment 106 may include a container for executing the model 112, a virtual machine executing the model 112, and the like. In some embodiments, an AI deployment 106 may include potentially multiple models 112 that may be executed across one or more regions of the cloud computing environment 102. For example, in some embodiments, each model 112 may be executed in the same region. As another example, in some embodiments, one or more models 112 may be executed in different regions.

In some embodiments, a cloud service provider may offer various configurations for cloud resources, including models 112. Each configuration may describe various attributes of an instance having that configuration. Such attributes may include attributes describing the particular hardware allocated to support an instance of that configuration. For example, such attributes may include a number of vCPUs allocated to the instance, what type of physical CPU will be used to support the instance, numbers and/or types of graphics processing units (GPUs) allocated to the instance, amounts of memory, amounts and types of local and/or remote storage network resources, and the like. In some embodiments, these attributes may describe attributes of software included in or used to support an instance of that configuration. For example, with respect to models 112, these attributes may include a model version, a number of tokens-per-minute (TPM) that can be processed by the model 112, or other attributes as can be appreciated. In some embodiments, each configuration may correspond to different price points or pricing models, thereby allowing users to use, in their AI deployment 106, model 112 configurations meeting the needs of their supported workloads, budgets, and other factors. In some embodiments, configurations are logically grouped into families or other groupings of configurations.

In some embodiments, the cloud computing environment 102 has a limited pool of computational resources that may be dynamically allocated to model 112 instances. For example, in some embodiments, the cloud computing environment 102 may have a limited number of GPUs that can be allocated to the execution of a model 112. In some embodiments, each region may similarly have their own limited amounts of available computational resources for models 112. This amount of computational resources in the cloud computing environment 102 (e.g., as a whole or per-region) is hereinafter referred to as a "capacity."

In some embodiments, to facilitate creation of an AI deployment 106 in the cloud computing environment 102, the deployment manager 104 accepts, from a client 108, a request 110 to create an AI deployment 106 in the cloud computing environment 102. Existing solutions for creating AI deployments 106 require that the request 110 specifically identify a particular model 112 configuration to use in the AI deployment 106 and specifically identify a region in which to deploy the model 112. Using these solutions, there are many circumstances in which creation of the AI deployment 106 may fail. For example, the identified region may not have enough available capacity for the identified model 112. As another example, certain models 112 may not be available in certain regions. Accordingly, creation of the AI deployment 106 may fail where the identified model 112 is not available in the identified region. This may result in a user spending significant amounts of time trying to troubleshoot creation of their AI deployment 106, particularly where the specific reasons as to why creation of the AI deployment 106 failed are unknown.

To address these concerns, instead of including a specifically defined model 112 configuration and region, the request 110 includes one or more constraints for selecting a model 112 to be executed in the AI deployment 106. Where the request 110 includes a request to create an AI deployment 106 with multiple models 112, the request 110 may include different sets of one or more constraints for each model 112 to be included in the AI deployment 106. Readers will appreciate that, as described herein, selecting a model 112 may include selecting a particular model 112 configuration and a particular region in which to create an instance of that model 112 configuration. In other words, selecting a model 112 and selecting a model 112 configuration may be used herein interchangeably.

In some embodiments, the one or more constraints may include a range for an attribute of a model 112. In such embodiments, only those models 112 whose attribute falls within that range may be selected for inclusion in the AI deployment 106. In some embodiments, the range may include a closed range (e.g., including a minimum and maximum value) or an open range (e.g., including only a minimum or maximum value). For example, the one or more constraints may indicate that only models 112 having OpenAI versions greater than 3.5 can be selected. As another example, the one or more constraints may include a minimum TPM that the model 112 can process. In some embodiments, the one or more constraints may include a listing of selectable model 112 configurations for a particular model 112 of the AI deployment 106. For example, for a given model 112 to be included in the AI deployment 106, the particular configuration of the given model 112 may only be selected from the listing of selectable model 112 configurations.

In some embodiments, the request 110 includes one or more constraints for selecting a region in which to deploy the model(s) 112 of the AI deployment 106. These constraints may be defined with respect to the AI deployment 106 as a whole or individual models 112. In some embodiments, these constraints may include a list of selectable regions for the AI deployment 106 or particular models 112. In some embodiments, these constraints may include a list of unusable regions for the AI deployment 106 or particular models 112. In some embodiments, these constraints may include a maximum latency of a region (e.g., relative to some other region, to a particular user base, and the like). In some embodiments, these constraints may include one or more services that must be available in a selected region. For example, the request 110 may indicate that a particular model 112 should only be deployed in regions where AI search indexing is available.

The particular model 112 configurations and regions that may be used in the AI deployment 106 may also be subject to other constraints not specifically included in the request 110. These constraints may be defined with respect to an account or subscription associated with the AI deployment 106, with respect to certain regulatory or compliance requirements, or otherwise defined. The deployment manager 104 may load or access these configurations in response to the request 110. For example, in some embodiments, a particular account or subscription for that account may be restricted to or from using particular model 112 configurations or regions. As another example, in some embodiments, certain regions may not allow or support certain model 112 configurations. As a further example, an account or subscription may be subject to one or more quotas limiting the amount of certain resources that may be used on associated deployments. Continuing with this example, a quota may limit the number of GPUs that can be allocated for an account, the number of instances of a particular model 112 or group of models 112 that can be allocated, an amount of network or storage resources that can be allocated for an account, and the like.

In some embodiments, the request 110 may also include one or more performance goals. The one or more performance goals are values for performance metrics (e.g., with respect to the AI deployment 106 as a whole or particular models 112) that the AI deployment 106 preferably approaches. For example, in some embodiments, the one or more performance goals may include a target TPM goal for a particular model 112. In some embodiments, these performance goals may correspond to a constraint also defined in the request 110. For example, a request 110 may indicate that a particular model 112 should have a minimum TPM of eight but a performance goal of thirty. Thus, when generating a deployment specification 114 as described below, the deployment manager 104 will select the particular model 112 to have a TPM of at least eight and assign a higher preference to models 112 with TPMs closer to thirty.

In response to the request 110, the deployment manager 104 determines a resource availability for the cloud computing environment 102. The resource availability for the cloud computing environment 102 describes the available capacity in each region of the cloud computing environment 102. For example, the available capacity for a particular region may include a number of available GPUs or some amount of another resource. The deployment manager 104 then generates a deployment specification 114 for the AI deployment 106 based on the constraints for the AI deployment 106 (e.g., in the request 110 and/or otherwise defined) and the resource availability of the cloud computing environment 102. A deployment specification 114 is data describing the configuration and resource allocation of the AI deployment 106. For example, the deployment specification 114 defines the particular models 112 to be created in the AI deployment 106 and the particular region or regions in which those models 112 will be deployed.

Particularly, the deployment manager 104 generates the deployment specification 114 by selecting, for each model 112 to be included in the AI deployment 106, a model 112 that satisfies the constraints for the AI deployment 106 and that can be deployed based on the resource availability. In some embodiments, as there may be many possible deployment specifications 114 that can satisfy these constraints and are able to be deployed, the deployment manager 104 generates the deployment specification 114 based on one or more optimization objectives. An optimization objective is a value associated with the AI deployment 106 that should be minimized or maximized when generating the deployment specification 114. For example, an optimization objective may include a minimized latency, a minimized operating cost (e.g., a financial cost), a maximized throughput, a minimum number of regions, a maximized number of TPMs, and the like.

In some embodiments, one or more of the optimization objectives may include a user-defined optimization objective (e.g., as included in the request 110). In some embodiments, one or more of the optimization objectives may include predefined optimization objectives. In some embodiments, where an AI deployment 106 is subject to multiple optimization objectives, these optimization objectives may be ranked or prioritized. For example, assuming a deployment specification 114 with equal values for some highest priority optimization objective, the next-highest priority optimization objective may be used to determine which deployment specification 114 is used for the AI deployment 106. In some embodiments, where an AI deployment 106 is subject to both a user-defined optimization objective and a predefined optimization objective, either optimization objective may override or take higher priority over the other.

In some embodiments, to generate the deployment specification 114, the deployment manager 104 generates an optimization problem based on the one or more constraints for the AI deployment and the one or more optimization objectives. An optimization problem is a mathematical problem to determine values for variables that minimize or maximize some optimization function, with these values subject to some constraints. Here, the variables of the optimization problem are the configurable parameters of the deployment specification 114, including the particular model(s) 112 and region(s) to use, while the optimization function is a function based on the one or more optimization objectives. For example, for an optimization objective of a minimized operating cost, the optimization function will output some value calculated as a function of the operating cost of a deployment specification 114.

In some embodiments, the deployment manager 104 encodes the one or more optimization objectives and constraints as data in a format processable by a solver. A solver is an application or algorithm that, when applied to an optimization problem, calculates the values for the variables of that optimization problem. Accordingly, the deployment manager 104 may apply the solver to the optimization problem to determine, as the values for the one or more variables, the particular model(s) 112 and regions for the AI deployment 106.

In some embodiments, after generating deployment specification 114, the deployment manager 104 may present (e.g., to the client 108) the deployment specification 114 or data describing the deployment specification 114 for review. This allows a user to approve the deployment specification 114 before creating the AI deployment 106. In some embodiments, the client 108 may provide an approval of the deployment specification 114, which causes the AI deployment 106 to be created in the cloud computing environment 102 based on the deployment specification 114. In some embodiments, this may include encoding the deployment specification 114 as Infrastructure-as-Code (IaC) code or some other executable code that is then executed so as to allocate resources for the AI deployment 106 accordingly.

In some embodiments, after being presented the deployment specification 114, the client 108 may submit an update to the one or more constraints or the one or more optimization objectives to the deployment manager 104. For example, a user may be dissatisfied with the generated deployment specification 114 and wishes to review a different deployment specification 114 generated using different criteria (e.g., different constraints and/or optimization objectives). In response to this update, the deployment manager 104 generates an updated deployment specification 114 based on the updated constraints and/or optimization objectives. This updated deployment specification 114 may be submitted to the client 108 for approval as described above.

In some embodiments, the client 108 may submit an update to the one or more constraints and/or optimization objectives after creation of the AI deployment 106. Accordingly, in some embodiments, the deployment manager 104 generates an updated deployment specification 114 based on the updated constraints and/or optimization objectives. In some embodiments, the AI deployment 106 may be modified based on the updated deployment specification 114. This may include, for example, adding or removing models 112 to the AI deployment 106, changing regions of the AI deployment, and the like.

Readers will appreciate that the approaches set forth herein allow for dynamic creation of AI deployments based on defined constraints and current resource availability. This reduces the likelihood that creation of an AI deployment will fail due to lack of capacity as the particular deployment specification for the AI deployment reflects the available capacity at the time of the request to create the AI deployment. Moreover, this reduces the likelihood that creation of an AI deployment will fail due to violating constraints or restrictions for the account or subscription associated with the deployment, improving overall system utility. Moreover, readers will appreciate that, although the discussions set forth herein are presented in the context of AI deployments, these approaches may also be applied to other cloud-based deployments using cloud-based resources other than or in addition to models.

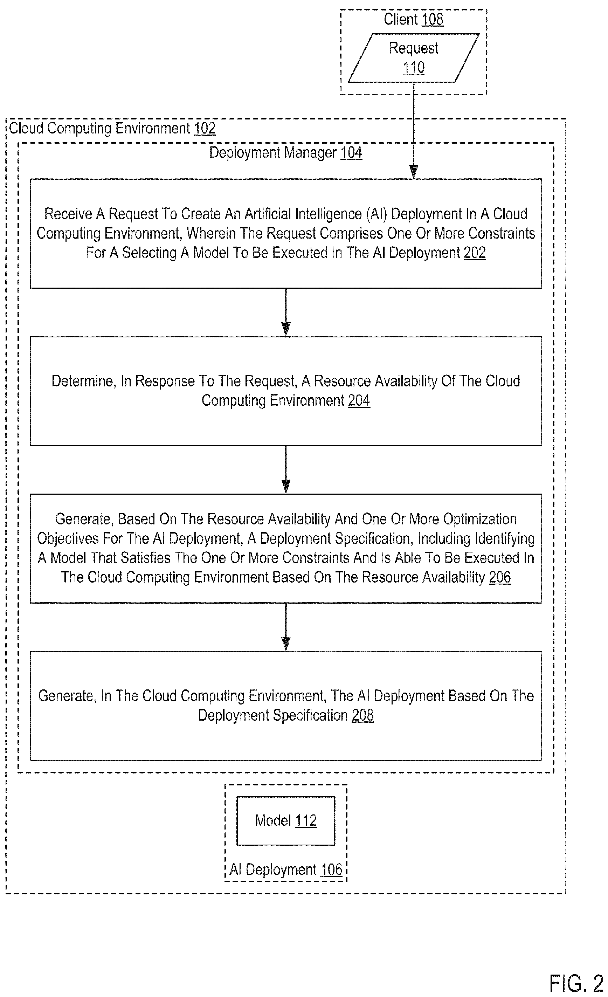

For further explanation, Fig. 2 sets forth a flowchart of an example method of dynamic constraint- and resource-based artificial intelligence (AI) deployment provisioning in accordance with some embodiments of the present disclosure. The method of Fig. 2 may be performed, for example, by a deployment manager 104 of Fig. 1. The method of Fig. 2 includes receiving 202 a request 110 (e.g., from a client 108) to create an artificial intelligence (AI) deployment 106 in a cloud computing environment 102, wherein the request 110 comprises one or more constraints for a selecting a model 112 to be executed in the AI deployment 106. The request 110 includes various constraints that define criteria that must be satisfied by a model 112 in order for that model 112 to be included in the AI deployment 106.

In some embodiments, the one or more constraints may include a range for an attribute of a model 112. In such embodiments, only those models 112 whose attribute falls within that range may be selected for inclusion in the AI deployment 106. In some embodiments, the range may include a closed range (e.g., including a minimum and maximum value) or an open range (e.g., including only a minimum or maximum value). For example, the one or more constraints may indicate that only models 112 having OpenAI versions greater than 3.5 can be selected. As another example, the one or more constraints may include a minimum TPM that the model 112 can process. In some embodiments, the one or more constraints may include a listing of selectable model 112 configurations for a particular model 112 of the AI deployment 106. For example, for a given model 112 to be included in the AI deployment 106, the particular configuration of the given model 112 may only be selected from the listing of selectable model 112 configurations.

In some embodiments, the request 110 includes one or more constraints for selecting a region in which to deploy the model(s) 112 of the AI deployment 106. These constraints may be defined with respect to the AI deployment 106 as a whole or individual models 112. In some embodiments, these constraints may include a list of selectable regions for the AI deployment 106 or particular models 112. In some embodiments, these constraints may include a list of unusable regions for the AI deployment 106 or particular models 112. In some embodiments, these constraints may include a maximum latency of a region (e.g., relative to some other region, to a particular user base, and the like). In some embodiments, these constraints may include one or more services that must be available in a selected region. For example, the request 110 may indicate that a particular model 112 should only be deployed in regions where AI search indexing is available.

In some embodiments, the request 110 may also include one or more performance goals. The one or more performance goals are values for performance metrics (e.g., with respect to the AI deployment 106 as a whole or particular models 112) that the AI deployment 106 preferably approaches. For example, in some embodiments, the one or more performance goals may include a target TPM goal for a particular model 112. In some embodiments, these performance goals may correspond to a constraint also defined in the request 110. For example, a request 110 may indicate that a particular model 112 should have a minimum TPM of eight but a performance goal of thirty. In some embodiments, these performance goals may serve as or otherwise correspond to optimization objectives for generating a deployment specification 114 as described below.

The method of Fig. 2 also includes determining 204, in response to the request 110, a resource availability in the cloud computing environment 102. In some embodiments, the resource availability for the cloud computing environment 102 describes the available capacity in each region of the cloud computing environment 102. For example, the available capacity for a particular region may include a number of available GPUs or some amount of another resource. As another example, in some embodiments, the available capacity for a particular region may indicate a number of additional instances of some model 112 that may be executed in that region. In some embodiments, the resource availability for the cloud computing environment 102 may also include data indicating a degree to which one or more quotas applicable to the AI deployment 106 are satisfied. For example, in some embodiments, certain models 112 or groups of models 112 may be subject to quotas limiting the number of instances that those models 112 or groups of models 112 that may be allocated to a particular account or subscription. Such quotas may be defined with respect to particular regions or across multiple regions. Accordingly, in some embodiments, the resource availability may indicate the degree to which these quotas are satisfied so as to indicate resources that are available under these quotas.

The method of Fig. 2 also includes generating 206, based on the resource availability and one or more optimization objectives for the AI deployment 106, a deployment specification 114, including identifying a model 112 that satisfied the one or more constraints and is able to be executed in the cloud computing environment 102 based on the resource availability. In some embodiments, as there are potentially many deployment specifications 114 that satisfy the one or more constraints of the request 110, the deployment specification 114 is further generated based on one or more optimization objectives. An optimization objective is a value associated with the AI deployment 106 that should be minimized or maximized when generating the deployment specification 114. For example, an optimization objective may include a minimized latency, a minimized operating cost (e.g., a financial cost), a maximized throughput, a minimum number of regions, a minimum distance to some other region, a maximized number of TPMs, and the like.

In some embodiments, these optimization objectives may include user-defined optimization objectives. In some embodiments, these user-defined optimization objectives may be indicated in the request 110. For example, in some embodiments, these user-defined optimization objectives may be identified as performance goals of the request 110 as described above. As another example, in some embodiments, these user-defined optimization objectives may be included as a parameter of the request 110 to create the AI deployment 106. In some embodiments, these user-defined optimization objectives may be defined as configurable parameters of an account associated with the AI deployment 106. In some embodiments, these optimization objectives may include pre-defined optimization objectives (e.g., non-user-defined or user-configurable optimization objectives.

Accordingly, in some embodiments, generating 206 the deployment specification 114 includes generating 206 a deployment specification 114 with a model 112 that satisfies the one or more constraints of the request 110 while minimizing and/or maximizing the one or more optimization objectives. In some embodiments, generating 206 the deployment specification 114 may be based on other constraints not defined in the request 110. These constraints may be defined with respect to an account or subscription associated with the AI deployment 106, with respect to certain regulatory or compliance requirements, or otherwise defined. For example, in some embodiments, a particular account or subscription for that account may be restricted to or from using particular model 112 configurations or regions. As another example, in some embodiments, certain regions may not allow or support certain model 112 configurations. In some embodiments, quotas as described above may serve as constraints for generating 206 the deployment specification 114.

The method of Fig. 2 also includes generating 208, in the cloud computing environment 102, the AI deployment 106 based on the deployment specification 114. In some embodiments, this may include encoding or converting the deployment specification 114 into code that, when executed, allocates the resources in the cloud computing environment 102 for the AI deployment 106, including the model 112. For example, in some embodiments, the deployment specification 114 may be encoded as a script, IaC code, or other executable code as can be appreciated.

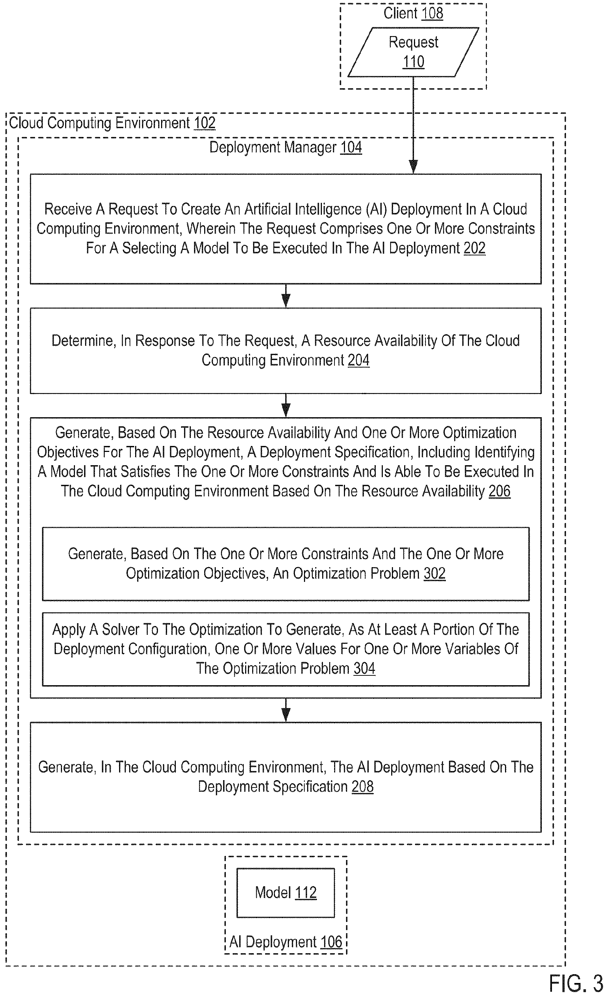

For further explanation, Fig. 3 sets forth a flowchart of another example method of dynamic constraint- and resource-based artificial intelligence (AI) deployment provisioning in accordance with some embodiments of the present disclosure. The method of Fig. 3 is similar to Fig. 2, differing in that generating 206 the deployment specification 114 also includes generating 302, based on the one or more constraints and the one or more optimization objectives, an optimization problem. An optimization problem is a mathematical problem to determine values for variables that minimize or maximize some optimization function, with these values subject to some constraints. Here, the variables of the optimization problem are the configurable parameters of the deployment specification 114, including the particular model(s) 112 and region(s) to use, while the optimization function is a function based on the one or more optimization objectives. For example, for an optimization objective of a minimized operating cost, the optimization function will output some value calculated as a function of the operating cost of a deployment specification 114.

The method of Fig. 3 further differs from Fig. 2 in that generating 206 the deployment specification 114 also includes applying 304 a solver to the optimization problem to generate, as at least a portion of the deployment specification 114, one or more values for one or more variables of the optimization problem. A solver is an application or algorithm that, when applied to an optimization problem, calculates the values for the variables of that optimization problem. Particularly, the solver seeks to find a set of values for the variables of the optimization problem that minimize or maximize the optimization function, subject to the one or more constraints of the optimization problem. Accordingly, the deployment manager 104 may encode the optimization problem in a format usable by the solver and apply the solver to determine, as the values for the one or more variables, the particular model(s) 112 and regions for the AI deployment 106.

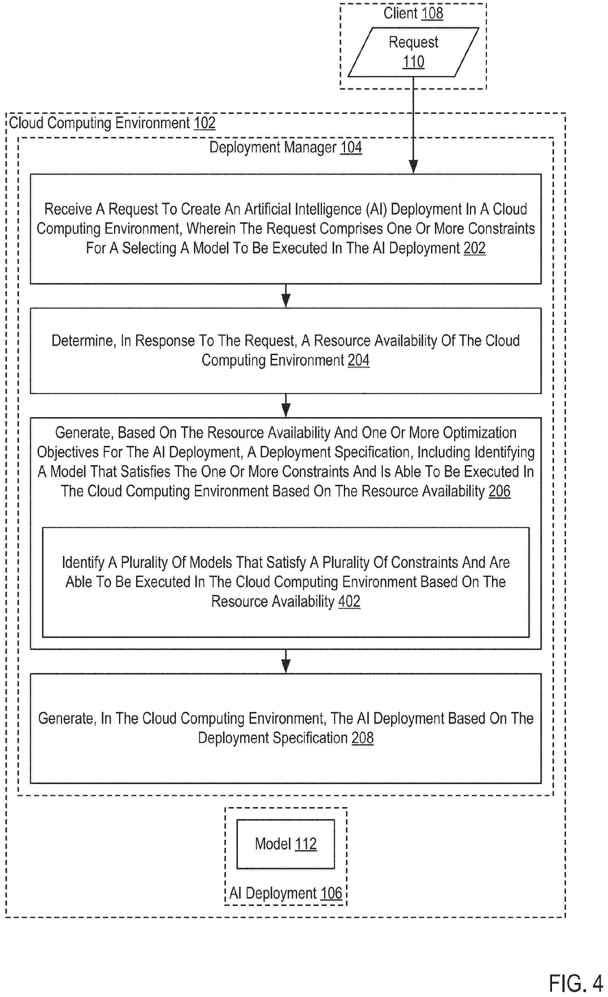

For further explanation, Fig. 4 sets forth a flowchart of another example method of dynamic constraint- and resource-based artificial intelligence (AI) deployment provisioning in accordance with some embodiments of the present disclosure. The method of Fig. 4 is similar to Fig. 2, differing in that generating 206 the deployment specification 114 includes identifying 402 a plurality of models 112 that satisfy a plurality of constraints and are able to be executed in the cloud computing environment 102 based on the resource availability. In some embodiments, the request 110 may include a request 110 to create an AI deployment 106 with multiple models 112 each with their own set of constraints. Accordingly, in some embodiments, generating 206 the deployment specification 114 may include identifying 402 these multiple models 112 so as to satisfy the constraints for each of the different models 112. In some embodiments, where generating 206 the deployment specification 114 includes generating and solving an optimization problem, these additional models 112 may serve to add additional dimensions (e.g., variables) to the optimization problem. Thus, the approaches set forth herein may be applied to an AI deployment 106 with a single model 112 in a single region and to AI deployments 106 with multiple models 112 deployed across potentially many regions.

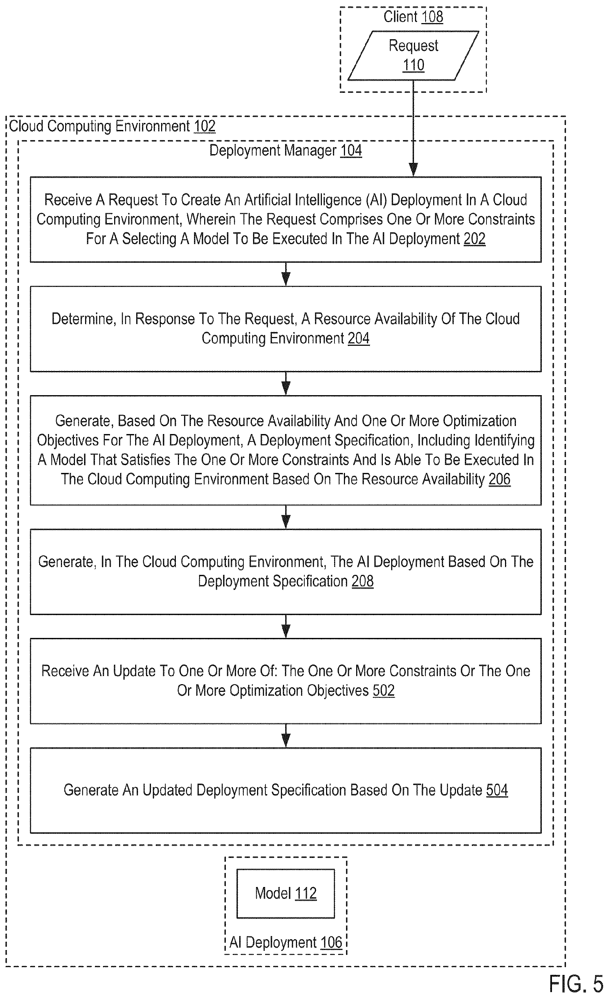

For further explanation, Fig. 5 sets forth a flowchart of another example method of dynamic constraint- and resource-based artificial intelligence (AI) deployment provisioning in accordance with some embodiments of the present disclosure. The method of Fig. 5 is similar to Fig. 2, differing in that the method of Fig. 5 also includes: receiving 502 an update to one or more of: the one or more constraints or the one or more optimization objectives. In some embodiments, receiving 502 the update may be performed before or after generating 208 the AI deployment 106. For example, in some embodiments, receiving 502 the update may be performed after the AI deployment 106 so as to modify how the AI deployment 106 is implemented in the cloud computing environment 102.

As another example, receiving 502 the update may be performed before generating 208 the AI deployment 106 and after presenting (e.g., to the client 108), the generated 206 deployment specification 114. In this example, after generating 206 a deployment specification 114 based on some request 110, the client 108 that provided the request 110 may be presented with the deployment specification 114 for review. In response, a user may accept the presented deployment specification 114, thereby causing the AI deployment 106 to be created based on the presented deployment specification 114. A user may also reject the presented AI deployment specification 114 by providing an update to the one or more constraints and/or optimization objectives so as to update the deployment specification 114.

The method of Fig. 5 also includes generating 504 an updated deployment specification based on the update. As the update changes the constraints and/or optimization objectives used to generate 206 the deployment specification 114, the updated deployment specification 114 may be different. This may be used, for example, to allow a user to change their existing AI deployment 106 based on different considerations or to allow a user to review how this update would affect their deployment specification 114. For example, after being presented with a deployment specification 114 generated 206 to minimize operating cost, a user may wish to review a deployment specification 114 generated to minimize latency. Accordingly, an updated deployment specification 114 can be generated 504 using minimized latency as a different optimization objective.

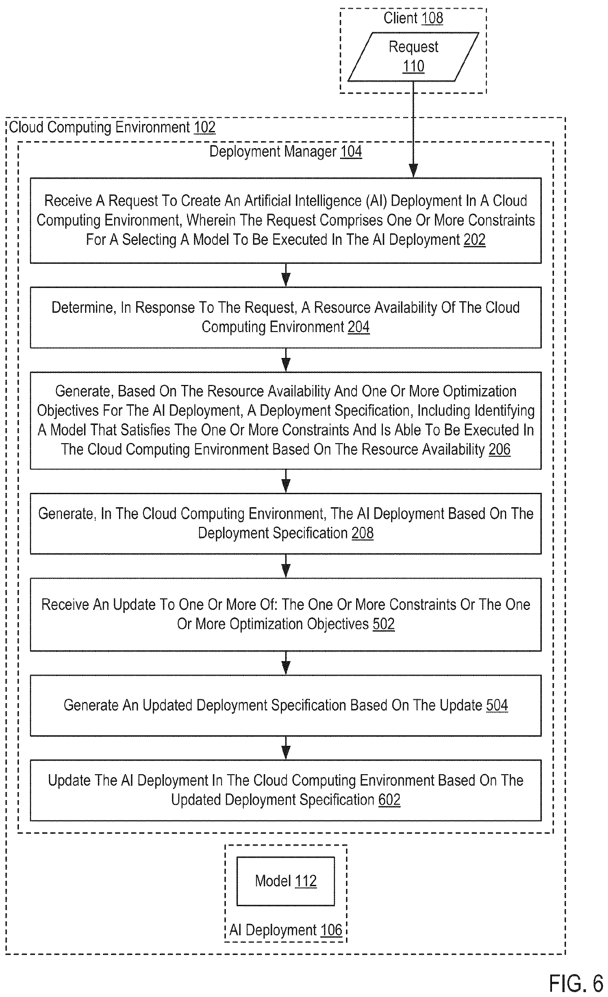

For further explanation, Fig. 6 sets forth a flowchart of another example method of dynamic constraint- and resource-based artificial intelligence (AI) deployment provisioning in accordance with some embodiments of the present disclosure. The method of Fig. 6 is similar to Fig. 5, differing in that the method of Fig. 6 also includes updating 602 the AI deployment 106 in the cloud computing environment 102 based on the updated deployment specification 114. After generating 504 the updated deployment specification 114, the updated deployment specification 114 may be used to update the AI deployment 106 accordingly. For example, in some embodiments, the updated deployment specification 114 may be encoded as executable code (e.g., a script, IaC code, and the like) that is executed in the cloud computing environment 102 so as to update 602 the AI deployment 106. This may include, for example, adding or removing models 112 to or from the AI deployment 106, changing one or more regions used by the AI deployment 106, or otherwise modifying the AI deployment 106.

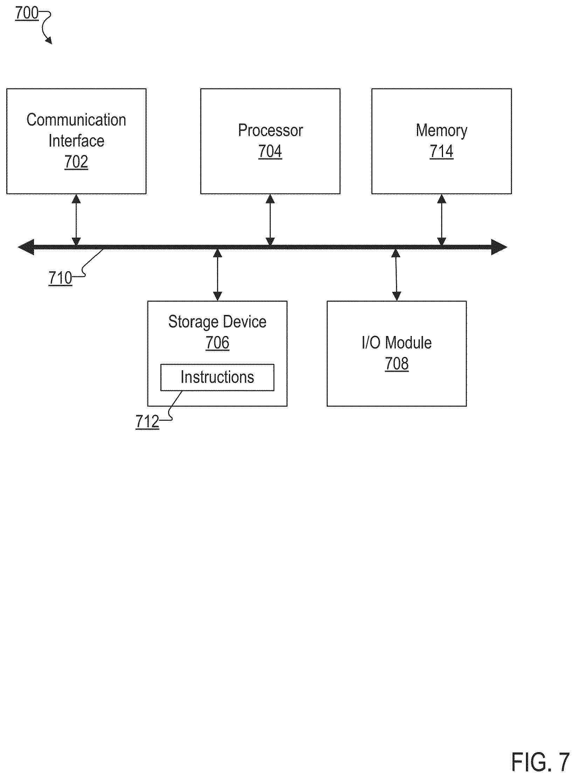

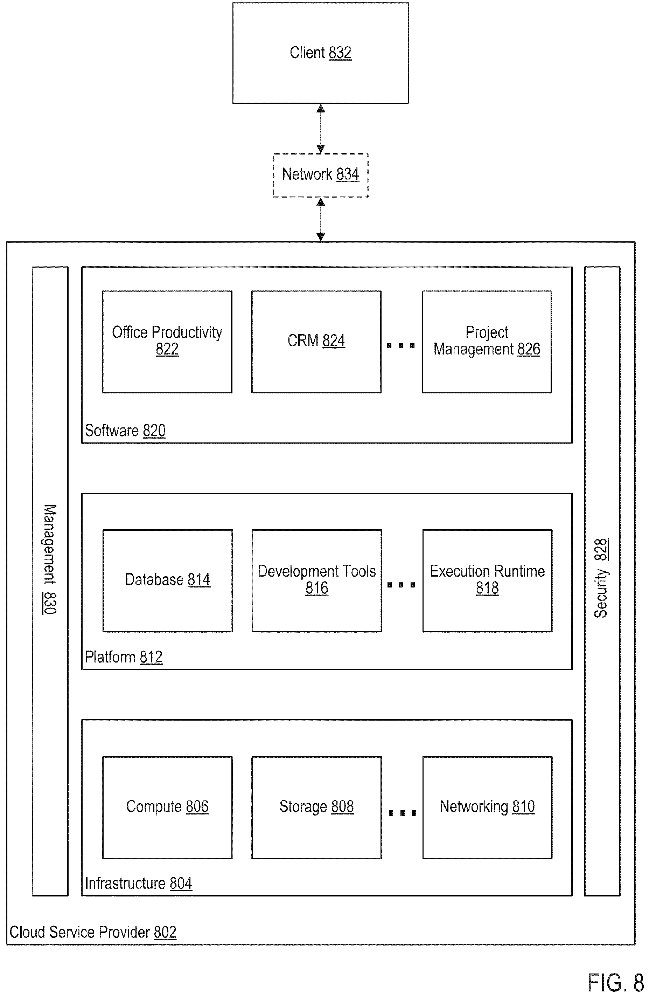

For further explanation, the sections included below provide some details regarding technologies that may be used to support dynamic constraint- and resource-based artificial intelligence (AI) deployment provisioning in accordance with some embodiments. For example, Fig. 7 sets forth an example of a computing device that may be used for some portion of securing an operating system in accordance with some embodiments. As an additional example of technologies that may be used to support dynamic constraint- and resource-based artificial intelligence (AI) deployment provisioning, Fig. 8 sets forth a block diagram of a cloud service provider 802 service architecture in accordance with some embodiments of the present disclosure.

For further explanation, Fig. 7 illustrates an exemplary computing device 700 that may be specifically configured to perform one or more of the processes described herein. As shown in Fig. 7, computing device 700 may include a communication interface 702, a processor 704, a storage device 706, an input/output (I/O) module 708, and computer memory 714 communicatively connected one to another via a communication infrastructure 710. While an exemplary computing device 700 is shown in Fig. 7, the components illustrated in Fig. 7 are not intended to be limiting. Additional or alternative components may be used in other embodiments. Components of computing device 700 shown in Fig. 7 will now be described in additional detail.

Communication interface 702 may be configured to communicate with one or more computing devices. Examples of communication interface 702 include, without limitation, a wired network interface (such as a network interface card), a wireless network interface (such as a wireless network interface card), a modem, an audio/video connection, and any other suitable interface.

Processor 704 generally represents any type or form of processing unit capable of processing data and/or interpreting, executing, and/or directing execution of one or more of the instructions, processes, and/or operations described herein. Processor 704 may perform operations by executing computer-executable instructions 712 (e.g., an application, software, code, and/or other executable data instance) stored in storage device 706.

Storage device 706 may include one or more data storage media, devices, or configurations and may employ any type, form, and combination of data storage media and/or device. For example, storage device 706 may include, but is not limited to, any combination of non-volatile media and/or volatile media. Electronic data, including data described herein, may be temporarily and/or permanently stored in storage device 706. For example, data representative of computer-executable instructions 712 configured to direct processor 704 to perform any of the operations described herein may be stored within storage device 706. In some examples, data may be arranged in one or more databases residing within storage device 706.

I/O module 708 may include one or more I/O modules configured to receive user input and provide user output. I/O module 708 may include any hardware, firmware, software, or combination thereof supportive of input and output capabilities. For example, I/O module 708 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 708 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 708 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 700.

For further explanation and as an additional example of a supporting technology for dynamic constraint- and resource-based artificial intelligence (AI) deployment provisioning, Fig. 8 sets forth a block diagram of a cloud service provider service architecture in accordance with some embodiments. The cloud service provider 802 can deliver a variety of resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 8, the cloud service provider 802 is accessed from a client device 834 via a network 832.

Fig. 8 depicts an embodiment where software 820 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 8, as examples of software 820 that can be delivered as-a-service, the illustrated embodiment includes office productivity 822 software, customer relationship management ('CRM') 824 software, and project management 826 software. The office productivity 822 software can include applications designed to facilitate common business and personal tasks, including word processing applications, applications for spreadsheet creation, presentation design applications, and many others. The CRM 824 software can include applications for managing a business organization's relationships and interactions with customers and potential customers. The project management 826 software can include applications designed to help teams plan, organize, and manage projects efficiently by facilitating collaboration and tracking the progress of projects. Readers will appreciate that in other embodiments, other types of software may be delivered using a SaaS model.

Fig. 8 depicts an embodiment where platforms 812 can be delivered as a service. Platform-as-a-service ('PaaS') is a model that provides cloud customers with platform resources that they can use to develop, run, and manage applications without the complexity of such deploying and managing such infrastructure on their own. In Fig. 8, as examples of platform 812 resources that can be delivered as-a-service, the illustrated embodiment includes database 814 services, development tools 816 services, and execution runtime 818 services. The database 814 services can be used to provide access to databases without management overhead for the user as the cloud service provider manages the provisioning, scaling, and maintenance of the databases. The development tools 816 services can provide developers with tools to design, develop, test, and deploy applications without needing to manage the underlying infrastructure. The execution runtime 818 services can provide environments where applications or other forms of computer program code can be executed, including services to scale the execution environment. Readers will appreciate that in other embodiments, other platform resources may be delivered using a PaaS model.

Fig. 8 depicts an embodiment where infrastructure 804 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 8, as examples of infrastructure 804 resources that can be delivered as-a-service, the illustrated embodiment includes compute 806 services, storage 808 services, and networking 810 services. The compute 806 services can be used to provide on-demand access to computational resources such as VMs, containers, and serverless functions, where the cloud service provider manages the provisioning, scaling, and maintenance of such resources. The storage 808 services can provide storage resources that can be used to store and access data, without the need for customers to purchase and manage on-premises physical storage resources. The networking 810 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 8 also provides management 830 resources. The management 830 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 8 also provides security 828 resources. The security 828 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Advantages and features of the present disclosure can be further described by the following statements:
1. A method of dynamic constraint- and resource-based artificial intelligence (AI) deployment provisioning, comprising: receiving a request to create an artificial intelligence (AI) deployment in a cloud computing environment, wherein the request comprises one or more constraints for a selecting a model to be executed in the AI deployment; determining, in response to the request, a resource availability of the cloud computing environment; generating, based on the resource availability and one or more optimization objectives for the AI deployment, a deployment specification, including identifying a model that satisfies the one or more constraints and is able to be executed in the cloud computing environment based on the resource availability; and generating, in the cloud computing environment, the AI deployment based on the deployment specification.
2. The method of statement 1, wherein generating the deployment specification comprises: generating, based on the one or more constraints and the one or more optimization objectives, an optimization problem; and applying a solver to the optimization problem to generate, as at least a portion of the deployment specification, one or more values for one or more variables of the optimization problem.
3. The method of statements 1 or 2, wherein the one or more optimization objectives comprise one or more user-defined optimization objectives.
4. The method of any combination of one or more of statements 1-3, wherein the one or more optimization objectives comprise one or more predefined optimization objectives.
5. The method of any combination of one or more of statements 1-4, wherein the request comprises a plurality of constraints for selecting a plurality of models for the AI deployment, and wherein generating the deployment specification further comprises identifying the plurality of models that satisfy the plurality of constraints and are able to be executed in the cloud computing environment based on the resource availability.
6. The method of any combination of one or more of statements 1-5, further comprising: receiving an update to one or more of: the one or more constraints or the one or more optimization objectives; and generating an updated deployment specification based on the update.
7. The method of any combination of one or more of statements 1-6, further comprising updating the AI deployment in the cloud computing environment based on the updated deployment specification.
8. The method of any combination of one or more of statements 1-7, wherein the one or more constraints comprise one or more ranges for one or more attributes of the model.
9. An apparatus for dynamic constraint- and resource-based artificial intelligence (AI) deployment provisioning, comprising: a memory; and one or more processing devices, operatively coupled to the memory, the one or more processing devices configured to: receive a request to create an artificial intelligence (AI) deployment in a cloud computing environment, wherein the request comprises one or more constraints for a selecting a model to be executed in the AI deployment; determine, in response to the request, a resource availability of the cloud computing environment; generate, based on the resource availability and one or more optimization objectives for the AI deployment, a deployment specification, including identifying a model that satisfies the one or more constraints and is able to be executed in the cloud computing environment based on the resource availability; and generate, in the cloud computing environment, the AI deployment based on the deployment specification.
10. The apparatus of statement 9, wherein, to generate the deployment specification, the one or more processing devices are further configured to: generate, based on the one or more constraints and the one or more optimization objectives, an optimization problem; and apply a solver to the optimization to generate, as at least a portion of the deployment specification, one or more values for one or more variables of the optimization problem.
11. The apparatus of statements 9 or 10, wherein the one or more optimization objectives comprise one or more user-defined optimization objectives.
12. The apparatus of any combination of one or more of statements 9-11, wherein the one or more optimization objectives comprise one or more predefined optimization objectives.
13. The apparatus of any combination of one or more of statements 9-12, wherein the request comprises a plurality of constraints for selecting a plurality of models for the AI deployment, and wherein, to generate the deployment specification, the one or more processing devices are further configured to identify the plurality of models that satisfy the plurality of constraints and are able to be executed in the cloud computing environment based on the resource availability.
14. The apparatus of any combination of one or more of statements 9-13, wherein the one or more processing devices are further configured to: receive an update to one or more of: the one or more constraints or the one or more optimization objectives; and generate an updated deployment specification based on the update.
15. The apparatus of any combination of one or more of statements 9-14, wherein the one or more processing devices are further configured to update the AI deployment in the cloud computing environment based on the updated deployment specification.
16. The apparatus of any combination of one or more of statements 9-15, wherein the one or more constraints comprise one or more ranges for one or more attributes of the model.
17. A non-transitory computer readable storage medium storing instructions which, when executed, cause a processing device to: receive a request to create an artificial intelligence (AI) deployment in a cloud computing environment, wherein the request comprises one or more constraints for a selecting a model to be executed in the AI deployment; determine, in response to the request, a resource availability of the cloud computing environment; generate, based on the resource availability and one or more optimization objectives for the AI deployment, a deployment specification, including identifying a model that satisfies the one or more constraints and is able to be executed in the cloud computing environment based on the resource availability; and generate, in the cloud computing environment, the AI deployment based on the deployment specification.
18. The non-transitory computer readable storage medium of statement 17, wherein, to generate the deployment specification, the instructions, when executed, further cause the processing device to: generate, based on the one or more constraints and the one or more optimization objectives, an optimization problem; and apply a solver to the optimization to generate, as at least a portion of the deployment specification, one or more values for one or more variables of the optimization problem.
19. The non-transitory computer readable storage medium of statements 17 or 18, wherein the one or more optimization objectives comprise one or more user-defined optimization objectives.
20. The non-transitory computer readable storage medium of any combination of one or more of statements 17-19, wherein the one or more optimization objectives comprise one or more predefined optimization objectives.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of dynamic constraint- and resource-based artificial intelligence (AI) deployment provisioning, comprising:
receiving a request to create an AI deployment in a cloud computing environment, wherein the request comprises one or more constraints for a selecting a model to be executed in the AI deployment;
determining, in response to the request, a resource availability of the cloud computing environment;
generating, based on the resource availability and one or more optimization objectives for the AI deployment, a deployment specification, including identifying a model that satisfies the one or more constraints and is able to be executed in the cloud computing environment based on the resource availability; and
generating, in the cloud computing environment, the AI deployment based on the deployment specification.

2. The method of claim 1, wherein generating the deployment specification comprises:
generating, based on the one or more constraints and the one or more optimization objectives, an optimization problem; and
applying a solver to the optimization problem to generate, as at least a portion of the deployment specification, one or more values for one or more variables of the optimization problem.

3. The method of claim 1 or 2, at least one of:
wherein the one or more optimization objectives comprise one or more user-defined optimization objectives;
wherein the one or more optimization objectives comprise one or more predefined optimization objectives; and
wherein the request comprises a plurality of constraints for selecting a plurality of models for the AI deployment, and wherein generating the deployment specification further comprises identifying the plurality of models that satisfy the plurality of constraints and are able to be executed in the cloud computing environment based on the resource availability.

4. The method of one of claims 1 to 3, further comprising:
receiving an update to one or more of: the one or more constraints or the one or more optimization objectives; and
generating an updated deployment specification based on the update.

5. The method of claim 4, further comprising updating the AI deployment in the cloud computing environment based on the updated deployment specification.

6. The method of one of claims 1 to 5, wherein the one or more constraints comprise one or more ranges for one or more attributes of the model.

7. An apparatus for dynamic constraint- and resource-based artificial intelligence (AI) deployment provisioning, comprising:
a memory; and
one or more processing devices, operatively coupled to the memory, the one or more processing devices configured to:
receive a request to create an AI deployment in a cloud computing environment, wherein the request comprises one or more constraints for a selecting a model to be executed in the AI deployment;
determine, in response to the request, a resource availability of the cloud computing environment;
generate, based on the resource availability and one or more optimization objectives for the AI deployment, a deployment specification, including identifying a model that satisfies the one or more constraints and is able to be executed in the cloud computing environment based on the resource availability; and
generate, in the cloud computing environment, the AI deployment based on the deployment specification.

8. The apparatus of claim 7, wherein, to generate the deployment specification, the one or more processing devices are further configured to:
generate, based on the one or more constraints and the one or more optimization objectives, an optimization problem; and
apply a solver to the optimization to generate, as at least a portion of the deployment specification, one or more values for one or more variables of the optimization problem.

9. The apparatus of claim 7 or 8, at least one of:
wherein the one or more optimization objectives comprise one or more user-defined optimization objectives;
wherein the one or more optimization objectives comprise one or more predefined optimization objectives; and
wherein the request comprises a plurality of constraints for selecting a plurality of models for the AI deployment, and wherein, to generate the deployment specification, the one or more processing devices are further configured to identify the plurality of models that satisfy the plurality of constraints and are able to be executed in the cloud computing environment based on the resource availability.

10. The apparatus of one of claims 7 to 9, wherein the one or more processing devices are further configured to:
receive an update to one or more of: the one or more constraints or the one or more optimization objectives; and
generate an updated deployment specification based on the update.

11. The apparatus of claim 10, wherein the one or more processing devices are further configured to update the AI deployment in the cloud computing environment based on the updated deployment specification.

12. The apparatus of one of claims 7 to 11, wherein the one or more constraints comprise one or more ranges for one or more attributes of the model.

13. A non-transitory computer readable storage medium storing instructions which, when executed, cause a processing device to:
receive a request to create an AI deployment in a cloud computing environment, wherein the request comprises one or more constraints for a selecting a model to be executed in the AI deployment;
determine, in response to the request, a resource availability of the cloud computing environment;
generate, based on the resource availability and one or more optimization objectives for the AI deployment, a deployment specification, including identifying a model that satisfies the one or more constraints and is able to be executed in the cloud computing environment based on the resource availability; and
generate, in the cloud computing environment, the AI deployment based on the deployment specification.

14. The non-transitory computer readable storage medium of claim 13, wherein, to generate the deployment specification, the instructions, when executed, further cause the processing device to:
generate, based on the one or more constraints and the one or more optimization objectives, an optimization problem; and
apply a solver to the optimization to generate, as at least a portion of the deployment specification, one or more values for one or more variables of the optimization problem.

15. The non-transitory computer readable storage medium of claim 13 or 14, at least one of:
wherein the one or more optimization objectives comprise one or more user-defined optimization objectives; and
wherein the one or more optimization objectives comprise one or more predefined optimization objectives.
